# EUROPÄISCHE PATENTSCHRIFT

(11) **EP 2 477 315 B1**
(45) Veröffentlichungstag und Bekanntmachung des Hinweises auf die Patenterteilung: **22.08.2018**
(21) Anmeldenummer: 12000071.6
(22) Anmeldetag: 07.01.2012
(51) Int. Cl.: H02K 15/085, H02K 15/09, H01F 41/06, H01F 41/082

(54) **Nadelwickelsystem für zu bewickelnde Wicklungsträger, Verfahren zum Bewickeln von Wicklungsträgern mit verteilter Wicklung, Innenläufer-Stator, Aussenläufer-Rotor und Wicklungsträger für Elektromotoren mit verteilter Wicklung**
Needle coiling system for coiling support to be coiled, method for coiling coiling supports with distributed coiling, internal rotor stator, external rotor and coiling support for electric motors with distributed coil
Système d'enroulement d'aiguille pour supports d'enroulement devant être enroulés, procédé d'enroulement de supports d'enroulement à enroulement réparti, stator intérieur, rotor extérieur et support d'enroulement pour moteurs électriques à enroulement réparti

(30) Priorität: 14.01.2011 DE 102011008662
(43) Veröffentlichungstag der Anmeldung: 18.07.2012
(73) Patentinhaber: Aumann Espelkamp GmbH, 32339 Espelkamp (DE)
(72) Erfinder: Hagedorn, Jürgen, 32312 Lübbecke (DE); Lüttge, Wolfgang, 31787 Hameln (DE)
(74) Vertreter: Schober, Mirko

(56) Entgegenhaltungen:
- EP-A1- 1 936 784
- EP-B1- 1 759 446
- DE-A1-102005 037 373
- JP-A- 2011 004 477

## Beschreibung

Die Erfindung betrifft ein Nadelwickelsystem für zu bewickelnde Wicklungsträger nach dem Oberbegriff des Anspruchs 1.

Nach dem Stand der Technik werden Statoren mit verteilter Wicklung nach einem Einziehverfahren mit einer Bewicklung versehen, wobei die Wicklungen zunächst auf Feldspulen auf einer Maschine erzeugt werden, um daran anschließend die Wicklungen von den Feldspulen abzunehmen und als Ganzes in den zu bewickelnden Stator hineinzuziehen.

Nach dem Einziehverfahren hergestellte Statoren weisen mehrere Nachteile auf. Zunächst sind die Wickelköpfe sehr aufwendig nachzubearbeiten, insbesondere das Verschalten der Anschlussdrähte ist maschinell aufwendig oder muss von vornherein manuell durchgeführt werden. Die Einziehtechnik benötigt aufgrund der großen Drahtwulste in den Wickelköpfen eine größere Drahtlänge als dies bei anderen Wickeltechniken der Fall wäre, wodurch der Materialaufwand steigt und die Länge der zu konstruierenden Elektromotoren zunimmt. Darüber hinaus benötigt die Einziehtechnik oft spezielles Werkzeug und ist damit unflexibel und nur für eine geringe Anzahl an verschiedenen Statortypen geeignet. Ferner sind die Drahtlitzen schwierig zu kontaktieren, da oft Litzen mit Ersatzquerschnitten verwendet werden. Außerdem sind die Phasenstränge im Wickelkopfbereich schwer gegeneinander zu isolieren und überstehende Wickelköpfe müssen in vielen Fällen geformt oder sogar gepresst werden, um den Stator im vorgesehenen Motorgehäuse unterbringen zu können. Da sich Windungen in den umfangreichen Wickelköpfen lösen können, muss oft eine Verklebung mit Harzen oder anderen Klebemitteln oder ein Abbindeverfahren erfolgen, was den Umfang der Wickelköpfe zusätzlich vergrößert.

Nach dem Stand der Technik ist u.a. die EP 1 759 446 B1 bekannt, die eine Wickelvorrichtung offenbart, bei der eine Wickelnadel in zwei im rechten Winkel zueinander stehenden Arbeitspositionen einstellbar ist.

Eine derartige Wickelvorrichtung kann Statoren für Innenläufer-Elektromotoren, die nach innen offene Nuten aufweisen, nur mit einer konzentrierten Wicklung bewickeln, da die Drahtbündel sonst noch freie Nuten beim Bewickeln mit verdecken und somit für weitere Polungen blockieren würde.

Die JP 2011 004 477 A offenbart, ebenso wie die EP 1 936 784 A1, eine schwenkbare Wickelnadel, die um einen Bereich von knapp 180° geschwenkt werden kann, um die Spitze der Drahtaustrittsdüse zum Wickelkörper ausrichten zu können. Um dabei die Spannung des Drahtes konstant zu halten, muss bei einer Schwenkbewegung der Drahtaustrittsdüse die ganze Haltemechanik entsprechend der Drehbewegung nachgeführt werden, was zu einer komplexen Gesamtbewegung der Nadelträgersystems führt. Auch wird, gerade wenn das Nadelträgersystem durch den Wickelträger hindurch greift, der Schwenkbereich stark eingeschränkt, was zu Verdeckungen noch freizuhaltender Nuten führt.

Die DE 10 2005 037 373 A1 offenbart eine Wickelanordnung, bei der wiederentnehmbare Wickelhilfsköper eine feste Wicklung mittels entsprechender Gleitabschnitte unterstützen und somit freizuhaltende Nuten nicht verdeckt werden. Der Aufwand, den Wickelträger vorab mit den Wickelhilfträgern zu bestücken und diese hinterher wieder zu entfernen ist enorm.

Aufgabe der Erfindung ist es deshalb ein Nadelwickelsystem zu entwickeln, welches eine verteilte Wicklung auch in nach innen geöffnete Nuten eines Wickelträgers ermöglicht, ohne dass benachbarte, noch freizuhaltende Nuten verdeckt werden. Aufgabe der Erfindung ist außerdem, ein Verfahren bereitzustellen, nach dem Wicklungsträger, wie Statoren oder Rotoren, mit nach innen offenen Nuten mit verteilter Wicklung versehen werden können. Darüber hinaus ist es Aufgabe der Erfindung, Wicklungsträger und insbesondere Innenläufer-Statoren und Außenläufer-Rotoren bereitzustellen, die mit verteilter Wicklung bewickelbar sind, d.h. die bei einem Bewicklungsschritt die noch nicht zu bewickelnden Nuten freihalten, so dass diese für nachfolgende Bewicklungsschritte bewickelbar sind.

Gelöst wird diese Aufgabe durch eine Nadelwickelsystem für zu bewickelnde Wicklungsträger gemäß des Oberbegriffs von Anspruch 1 durch die Merkmale des kennzeichnenden Teils des Anspruchs 1.

Anspruch 1 sieht ein Nadelwickelsystem für zu bewickelnde Wicklungsträger, insbesondere Statoren, Anker oder Rotoren von Elektromotoren mit verteilter Wicklung vor, das einen translatorisch in Längsrichtung und/oder in Querrichtung beweglichen Wickelkopf, ein Nadelträgersystem mit einer Drahtaustrittsdüse und eine Drahtführung umfasst, wobei das Nadelträgersystem über eine Parallelogrammführung von einer Antriebseinheit antreibbar ist und wobei die Parallelogrammführung Kopplungsstangen so antreibt, dass ein Schwenkklotz des Nadelträgersystems entlang eines vollen virtuellen Kreisumfangs schwenkbeweglich ist und die Spitze der Drahtaustrittsdüse des Nadelträgersystems stets ins Zentrum des virtuellen Kreises gerichtet ist und somit einen virtuellen Schwenkpunkt definiert.

Das Nadelwickelsystem nach Anspruch 1 ermöglicht eine Verkürzung des Wickelkopfes. Mit dem Nadelwickelsystem können Statoren und Rotoren einfach mit nur einer Maschine fertiggestellt werden. Das Nadelwickelsystem erlaubt im Vergleich zum Einziehverfahren die Verarbeitung von dickeren Ersatzquerschnitten, wodurch die Möglichkeit von Fehlern beim Kontaktierverfahren verringert wird. Für mit dem Nadelwickelsystem hergestellte Statoren und Rotoren wird weniger Material, wie beispielsweise Kupferlackdraht benötigt, da große Wulste an den Wickelköpfen vermieden werden. Des Weiteren kann ein Abbinden oder Verkleben sowie ein Formen oder Pressen der Wickelköpfe unterbleiben. Als weiterer Vorteil sind die Phasen einfacher durch entsprechend gestaltete Kunststoffendscheiben isolierbar. Darüber hinaus ist das Nadelwickelsystem sehr flexibel einsetzbar und ermöglicht mehrere Fertigungsverfahren, da die Verwendung von anders gestalteten Bauteilen, lediglich durch Änderungen der Einstellungen im Steuerprogramm und der Änderung einer Spulenträgeraufnahme möglich ist. Durch die Direktbewicklung der Wicklungsträger sind außerdem weniger Verschaltungsdrähte als bei Anwendung eines Einziehverfahrens erforderlich. Als weiterer Vorteil besteht die Möglichkeit elektrische Anschlusspunkte konstruktiv an Kunststoffendkappen vorzusehen.

Vorteilhafte Ausgestaltungen und Weiterbildungen des Nadelwickelsystems für zu bewickelnde Wicklungsträger ergeben sich aus den Unteransprüchen 2 und 3.

Demnach ist vorteilhaft, dass die Parallelogrammführung über Stellräder, vorzugsweise über Zahnräder, synchronisiert ist.

Die Synchronisierung der Parallelogrammführung über Stellräder ermöglicht es, den Wickelkopf des Nadelwickelsystems schlank zu gestalten und trotzdem volle Funktionalität im Hinblick auf die Schwenkbewegungen zu gewährleisten. Durch die schlanke Formgebung sind auch Wicklungsträger mit kleinen Durchmessern mit dem Nadelträgersystem bewickelbar.

Vorteilhaft ist auch, dass die Drahtführung vor der Drahtaustrittsdüse eine jeweils mit einem Halter am Schwenkklotz gelagerte Führungsrolle und Umlenkrolle aufweist. Führungsrolle und Umlenkrolle ermöglichen eine sichere Drahtführung und große Biegungen des zuzuführenden Drahtes auch bei sehr verschwenkter Drahtaustrittsdüse.

Hiermit kann ein Verfahren zum Bewickeln von Wicklungsträgern mit verteilter Wicklung, vorzugsweise von Statoren oder Rotoren, mit einer Nadelwickelvorrichtung, insbesondere nach den Ansprüchen 1 bis 3, durchgeführt werden, welches die folgenden Schritte umfasst:
A. - Bewickeln des Wicklungsträgers mit einem Draht einer ersten Polung, wobei der Draht vom Nadelwickelsystem entlang der für einen Wickelschritt vorgesehenen Nuten geführt und an den Stirnseiten des Wicklungsträgers in eine erste Aufnahme eingebracht wird, und wobei in den Nuten und in der ersten Aufnahme ein Drahtbündel einer Polung gebildet wird, welches weitere Nuten und Aufnahmen für weitere Drahtbündel entsprechend dem vorgesehenen Wickelschritt nicht verdeckt,
B. - gegebenenfalls Bewickeln des Wicklungsträgers mit weiteren Drähten entsprechend dem Schritt A in noch freie Nuten und Aufnahmen nach dem vorgesehenen Wickelschritt, wobei beim Bewickeln mit dem letzten Drahtbündel die Aufnahmen an den Stirnseiten so angeordnet sein können, dass die Nuten nach dem Bewickeln mit dem letzten Drahtbündel verdeckt sind.

Das Verfahren hat gegenüber herkömmlichen Verfahren, wie dem Einziehverfahren, den Vorteil, dass die bewickelten Statoren oder Rotoren keine großen Drahtwulste an den Stirnseiten aufweisen, die geformt und/oder verklebt werden müssten. Durch die damit insgesamt kompakteren Statoren und Rotoren sind kürzere Elektromotoren realisierbar. Außerdem sind die elektrischen Anschlusspunkte konstruktiv besser zugänglich und die einzelnen Phasen besser zu isolieren. Das hier beschriebene Wickelverfahren verbraucht darüber hinaus vergleichsweise weniger teuren Kupferdraht als die Einziehverfahren. Außerdem können dickere Einzeldrähte verarbeitet werden.

Vorteilhafte Ausgestaltungen und Weiterbildungen des Verfahrens zum Bewickeln von Wicklungsträgern mit verteilter Wicklung, vorzugsweise von Statoren oder Rotoren, mit einer Nadelwickelvorrichtung, insbesondere nach den Ansprüchen 1 bis 3, ergeben sich aus der folgenden Beschreibung.

Demgemäß ist vorteilhaft, dass die Statoren Innenläufer-Statoren und die Rotoren Außenläufer-Rotoren sind, die jeweils vorzugsweise zylindrisch sind.

Zylindrische Innenläufer-Statoren und Außenläufer-Rotoren sind aufgrund ihrer geometrischen Formgebung besonders effizient nach dem oben beschriebenen Wicklungsverfahren zu bewickeln.

Vorteilhaft ist auch, dass die Statoren oder Rotoren jeweils nach innen geöffnete Nuten aufweisen.

Besonders bei nach innen geöffneten Nuten der Wicklungsträger werden die Vorteile des Wickelverfahrens sichtbar, da der kleinere Umfang an der Innenseite des Wicklungsträgers zu einem schlechteren Zugang zu den einzelnen Nuten führt.

Vorteilhaft ist außerdem, dass der zu bewickelnde Wicklungsträger für das Bewickeln radial beweglich angeordnet ist und vorzugsweise durch einen Servomotor angetrieben wird.

Durch Rotieren des Wicklungsträgers werden die erforderlichen Bewegungen des Nadelwickelsystems minimiert und damit die Bewicklungszeit verkürzt.

Vorteilhaft ist ferner, dass der Wicklungsträger zum Verschalten der Spulen an den Aufnahmen der Stirnseiten radial bewegt wird.

Durch Rotieren des Wicklungsträgers kann die für das Verschalten erforderliche Zeit verringert werden, außerdem werden die notwendigen Bewegungen des Nadelträgersystems reduziert.

Vorteilhaft ist darüber hinaus, dass als weiterer Schritt das Befestigen des Drahtes an einer der Stirnseiten des Wicklungsträgers für alle erforderlichen Anschlusspunkte einer Stern- bzw. Dreiecks-Schaltung vorgesehen ist.

Durch diesen Verfahrensschritt werden die Anschlusspunkte gleich mit generiert und insbesondere müssen die jeweiligen Drahtenden nicht später isoliert werden.

Die Erfindung sieht ebenfalls einen Innenläufer-Stator, insbesondere zum Bewickeln nach einem der oben beschriebenen Verfahren, vor, der ein vorzugsweise zylindrisch geformtes Blechpaket und eine Isolierung umfasst, wobei der Innenläufer-Stator nach innen offene Nuten aufweist, wobei der Innenläufer-Stator Stirnseiten und einen Zylindermantel aufweist, wobei der Innenläufer-Stator an den Stirnseiten mindestens zwei getrennte Aufnahmen für unterschiedlich gepolte Drahtbündel aufweist und wobei mindestens eine Aufnahme für ein Drahtbündel außerhalb des Öffnungsbereichs der Nuten angeordnet und durch Wickeln des Drahtes belegbar ist, ohne dabei weitere Aufnahmen für Drahtbündel anderer Spulen zu blockieren.

Ein derartiger Innenläufer-Stator hat den Vorteil, dass eine einfachere Phasenisolation durch entsprechend zu gestaltende Kunststoffendscheiben erfolgen kann und die Wickelköpfe des Stators nicht geformt, abgebunden oder geklebt werden müssen. Der Materialeinsatz an Kupferdraht wird zudem niedrig gehalten, wobei auch dickere Kupferdrähte verwendbar sind.

Eine vorteilhafte Weiterbildung des Innenläufer-Stators ergibt sich daraus, dass die Aufnahmen an den Stirnseiten als bogenförmige Wickelköpfe ausgeführt sind.

Die bogenförmigen Wickelköpfe erfordern aufgrund der Aufnahmen des Stators nur sehr wenig zusätzlichen Raum, so dass der Stator in kompakte Motoren eingesetzt werden kann. Ebenfalls sieht die Erfindung einen Außenläufer-Rotor, insbesondere zum Bewickeln nach dem oben beschriebenen Verfahren, vor, der ein vorzugsweise zylindrisch geformtes Blechpaket und eine Isolierung umfasst, wobei der Außerläufer-Rotor nach innen offene Nuten aufweist und wobei der Außenläufer-Rotor Stirnseiten und einen Zylindermantel aufweist, wobei der Außerläufer-Rotor an den Stirnseiten mindestens zwei getrennte Aufnahmen für unterschiedlich gepolte Drahtbündel aufweist, wobei mindestens eine Aufnahme für ein Drahtbündel außerhalb des Öffnungsbereichs der Nuten angeordnet und durch Wickeln des Drahtes belegbar ist, ohne dabei weitere Aufnahmen für Drahtbündel anderer Spulen zu blockieren.

Für einen derartigen Außenläufer-Rotor ergeben sich die gleichen Vorteile wie für den oben beschriebenen Innenläufer-Stator.

Eine vorteilhafte Weiterbildung des Außenläufer-Rotors ergibt sich daraus, dass die Aufnahmen an den Stirnseiten als bogenförmige Wickelköpfe ausgeführt sind.

Auch hier erfordern die bogenförmigen Wickelköpfe aufgrund der Aufnahmen des Rotors nur sehr wenig zusätzlichen Raum, so dass der Rotor in kompakte Motoren eingesetzt werden kann.

Hiermit wird ein Wicklungsträger für Elektromotoren mit verteilter Wicklung, insbesondere nach einem der oben beschriebenen Verfahren, vorgesehen, der ein vorzugsweise zylindrisch geformtes Blechpaket und eine Isolierung umfasst, wobei der Wicklungsträger nach innen offene Nuten aufweist und wobei der Wicklungsträger Stirnseiten und einen Zylindermantel aufweist, wobei der Wicklungsträger an den Stirnseiten mindestens zwei getrennte Aufnahmen für unterschiedlich gepolte Drahtbündel aufweist und wobei mindestens eine Aufnahme für ein Drahtbündel außerhalb des Öffnungsbereichs der Nuten angeordnet und durch Wickeln des Drahtes belegbar ist, ohne dabei weitere Aufnahmen für Drahtbündel anderer Spulen zu blockieren.

Für einen derartigen Wicklungsträger ergeben sich die gleichen Vorteile wie für den oben beschriebenen Innenläufer-Stator.

Vorteilhafte Ausgestaltungen und Weiterbildungen des Wicklungsträgers für Elektromotoren mit verteilter Wicklung ergeben sich darausaus, dass die Aufnahmen an den Stirnseiten als bogenförmige Wickelköpfe ausgeführt sind.

Diese Vorteile eines Wicklungsträgers entsprechen den Vorteilen des bevorzugten Innenläufer-Stators.

Außerdem ist es vorteilhaft, dass der Wicklungsträger als Stator eines Innenläufer-Elektromotors oder als Rotor eines Außenläufer-Elektromotors angeordnet ist.

Derartige Wicklungsträger machen sowohl Innenläufer-Statoren als auch Außenläufer-Rotoren verfügbar, deren Bewicklung vergleichsweise wenig Kupferdraht erfordert und deren Wickelköpfe kaum zusätzlichen Platz beanspruchen.

Weitere Eigenschaften, Merkmale und Vorteile der Erfindung werden nachfolgend anhand von Figuren von bevorzugten Ausführungsformen des Nadelwickelsystems nach Anspruch 1, des Verfahrens zum Bewickeln von Wicklungsträgern mit verteilter Wicklung, des Innenläufer-Stators , des Außenläufer-Rotors und des Wicklungsträgers näher erläutert. Im Einzelnen zeigen
- Figur 1a -: einen schematischen Längsschnitt entlang der Linie A-A der Figur 1b des Nadelwickelsystems mit einem zu bewickelnden Innenläufer-Stator,
- Figur 1b -: einen schematischen Querschnitt des Nadelwickelsystems mit einem zu bewickelnden Innenläufer-Stator,
- Figur 1c -: eine schematische Draufsicht auf das Nadelsystem mit einem zu bewickelnden Innenläufer-Stator,
- Figur 2a -: einen schematischen Längsschnitt entlang der Linie A-A der Figur 1b des Nadelwickelsystems mit einem zu bewickelnden Rotor,
- Figur 2b -: einen schematischen Querschnitt des Nadelwickelsystems mit einem zu bewickelnden Rotor,
- Figur 2c -: eine schematische Draufsicht auf das Nadelsystem mit einem zu bewickelnden Rotor,
- Figur 3a -: einen schematischen Längsschnitt des Nadelwickelsystems mit einem zu bewickelnden Innenläufer-Stator beim Bewickeln von innen, entlang der einer Nut,
- Figur 3b -: einen schematischen Längsschnitt des Nadelwickelsystems mit einem zu bewickelnden Innenläufer-Stator beim Bewickeln, wobei die Drahtaustrittsdüse die erste Stirnseite des Stators erreicht hat,
- Figur 3c -: einen schematischen Längsschnitt des Nadelwickelsystems mit einem zu bewickelnden Innenläufer-Stator beim Bewickeln, wobei die Drahtaustrittsdüse an der ersten Stirnseite des Stators geschwenkt wurde,
- Figur 3d -: einen schematischen Längsschnitt des Nadelwickelsystems mit einem zu bewickelnden Innenläufer-Stator beim Bewickeln, wobei die Drahtaustrittsdüse die Aufnahme des Drahtbündels an der ersten Stirnseite für die erste Polung erreicht hat,
- Figur 3e -: einen schematischen Längsschnitt des Nadelwickelsystems mit einem zu bewickelnden Innenläufer-Stator beim Bewickeln, wobei die Drahtaustrittsdüse nach Rotieren des Stators wieder innen entlang einer weiteren Nut fährt,
- Figur 3f -: einen schematischen Längsschnitt des Nadelwickelsystems mit einem zu bewickelnden Innenläufer-Stator beim Bewickeln, wobei die Drahtaustrittsdüse die zweite Stirnseite des Stators erreicht hat,
- Figur 3g -: einen schematischen Längsschnitt des Nadelwickelsystems mit einem zu bewickelnden Innenläufer-Stator beim Bewickeln, wobei die Drahtaustrittsdüse an der zweiten Stirnseite des Stators geschwenkt wurde,
- Figur 3h -: einen schematischen Längsschnitt des Nadelwickelsystems mit einem zu bewickelnden Innenläufer-Stator beim Bewickeln, wobei die Drahtaustrittsdüse die Aufnahme des Drahtbündels an der zweiten Stirnseite für die erste Polung erreicht hat,
- Figur 3i -: einen schematischen Längsschnitt des Nadelwickelsystems mit einem zu bewickelnden Innenläufer-Stator beim Bewickeln, wobei die Drahtaustrittsdüse die Aufnahme des Drahtbündels an der ersten Stirnseite für die zweite Polung erreicht hat,
- Figur 3j -: einen schematischen Längsschnitt des Nadelwickelsystems mit einem zu bewickelnden Innenläufer-Stator beim Bewickeln, wobei die Drahtaustrittsdüse die Aufnahme des Drahtbündels an der ersten Stirnseite für die dritte Polung erreicht hat,
- Figur 4a -: Schaltschema für die erste Phase U am Wicklungsträger,
- Figur 4b -: Schaltschema für die zweite Phase V am Wicklungsträger,
- Figur 4c -: Schaltschema für die dritte Phase W am Wicklungsträger,
- Figur 4d: Schaltschema für alle Phasen U, V und W am Wicklungsträger,
- Figur 5a -: einen schematischen Längsschnitt des Blechpakets eines Innenläufer-Stators,
- Figur 5b -: einen schematischen Querschnitt des Blechpakets eines Innenläufer-Stators,
- Figur 6a -: einen schematischen Längsschnitt des Innenläufer-Stators mit Stirnseitenisolation,
- Figur 6b -: einen schematischen Querschnitt des Innenläufer-Stators mit Stirnseitenisolation,
- Figur 7a -: einen schematischen Längsschnitt des Innenläufer-Stators mit Stirnseitenisolation und einer ersten Wicklung der Phase U,
- Figur 7b -: einen schematischen Querschnitt des Innenläufer-Stators mit Stirnseitenisolation und einer ersten Wicklung der Phase U,
- Figur 8a -: einen schematischen Längsschnitt des Innenläufer-Stators mit Stirnseitenisolation und einer zweiten Wicklung der Phase V,
- Figur 8b -: einen schematischen Querschnitt des Innenläufer-Stators mit Stirnseitenisolation und einer zweiten Wicklung der Phase V,
- Figur 9a -: einen schematischen Längsschnitt des Innenläufer-Stators mit Stirnseitenisolation und einer dritten Wicklung der Phase W,
- Figur 9b -: einen schematischen Querschnitt des Innenläufer-Stators mit Stirnseitenisolation und einer dritten Wicklung der Phase W,
- Figur 10a -: einen schematischen Längsschnitt des vollständig mit den Phasen U, V und W bewickelten Innenläufer-Stators,
- Figur 10b -: einen schematischen Querschnitt des vollständig mit den Phasen U, V und W bewickelten Innenläufer-Stators.

Anhand der folgenden Figuren werden Ausführungsformen des Nadelwickelsystems und von Wicklungsträgern mit den Beispielen eines Innenläufer-Stators und eines Außenläufer-Rotors erläutert. Mit Hilfe der Figuren wird darüber hinaus auch eine Ausführungsform des Wicklungsverfahrens beschrieben.

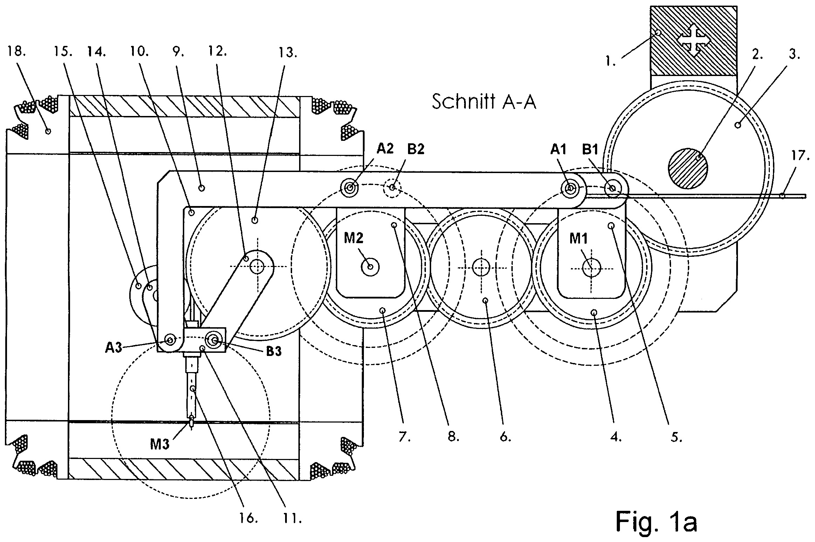

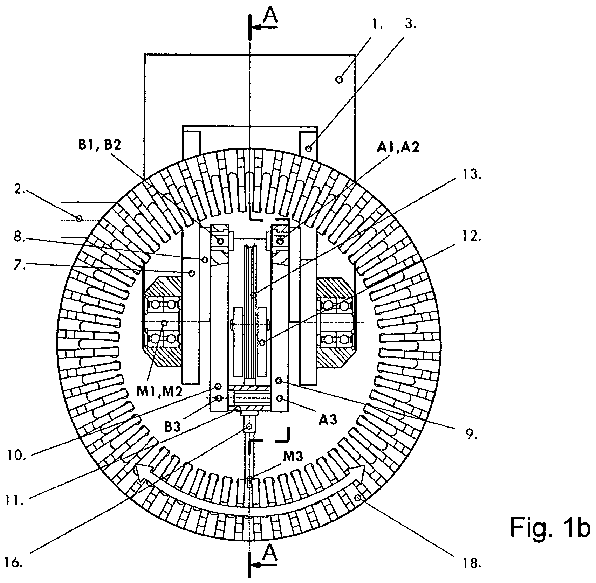

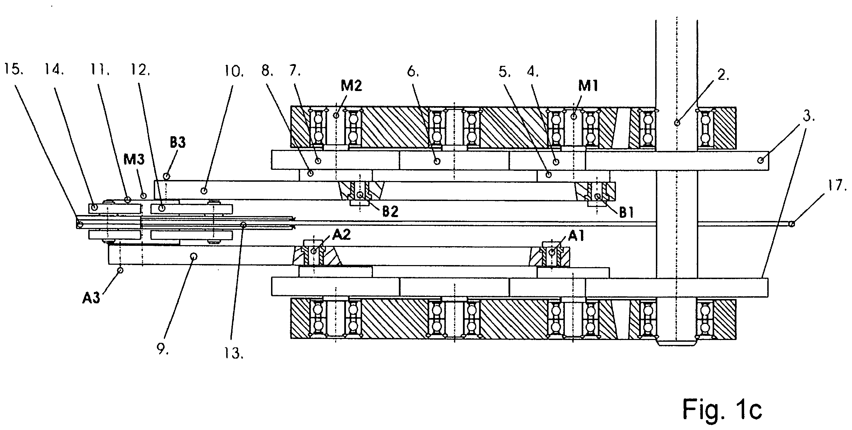

Die Figuren 1a, 1b und 1c zeigen das Nadelwickelsystem, das in den Figuren 1a und 1b an einer Nut eines Innenläufer-Stators 18 angeordnet ist. Der Wickelarm 1 wird für das Bewickeln an den Stator 18 herangefahren und der Draht an einer der Stirnseiten des Stators 18 fixiert. Anschließend wird der Wickelkopf in das Zentrum des Stators 18 bewegt, wobei sich die Drahtaustrittsdüse 16 bezogen auf die Koppelstangen A9 und B10 in einer 90°-Stellung befindet. Die Drahtaustrittsdüse ist in einem Schwenkklotz 11 angeordnet, die unmittelbare Zuführung des Drahtes zur Drahtaustrittsdüse erfolgt mit Hilfe einer Umlenkrolle 13 und einer Führungsrolle 15. Sowohl die Führungsrolle 15 als auch die Umlenkrolle 13 sind über einen Halter der Führungsrolle 14 bzw. einen Halter der Umlenkrolle 13 am Schwenkklotz mit den Drehachsen A3 bzw. B3 gelagert. Bei jeder Schwenkbewegung der Drahtaustrittsdüse 16 ist der Schwenkklotz 11 am Kreisumfang eines virtuellen Kreises angeordnet, dessen Zentrum durch die Spitze M3 der Drahtaustrittsdüse 16 definiert ist. Auf diese Weise können positionsgenaue Schwenkbewegungen des Wickelkopfes des Nadelwickelsystems durchgeführt werden, was für eine präzise Bewicklung entlang der engen Nuten erforderlich ist.

Der Schwenkklotz 11 ist am vorderen Ende der im Kopfbereich im rechten Winkel gebogenen Kopplungsstangen A9 und B10 angeordnet. Die Kopplungsstangen A und B 9, 10 werden mittels einer Parallelogrammführung jeweils über synchronisierte Stellräder 4 und 7, vorderes Stellrad 7 und hinters Stellrad 4, und ein Zwischenrad 6 analog einer Dampflokomotive angetrieben und können auf diese Weise die Schwenkbewegungen des Schwenkklotzes 11 einleiten. Die Stellräder 4, 7 sind jeweils an Anlenkarmen 5, 8 mit den Kopplungsstangen A und B 9, 10 verbunden. Die Parallelogrammführung ergibt sich aus den entsprechend angeordneten Drehlagern A1, M1, A2, M2 bzw. B1, M1, B2, M2. Der Antrieb durch einen Servomotor wird über Gleichlaufräder 3 mit Verstellwelle 2 auf die hinteren Stellräder 4 übertragen.

Der Stator 18 verfügt an seinen beiden Stirnseiten bei der dargestellten Ausführungsform über Aufnahmen für drei zu bewickelnde Phasen, beispielsweise U, V und W, wobei die Aufnahmen in der Figur 1a zur besseren Darstellung bereits Drahtbündel aufweisen.

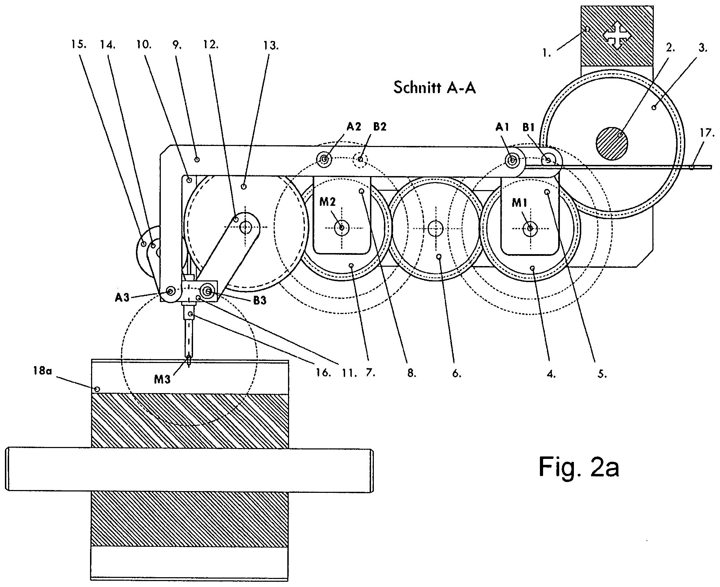

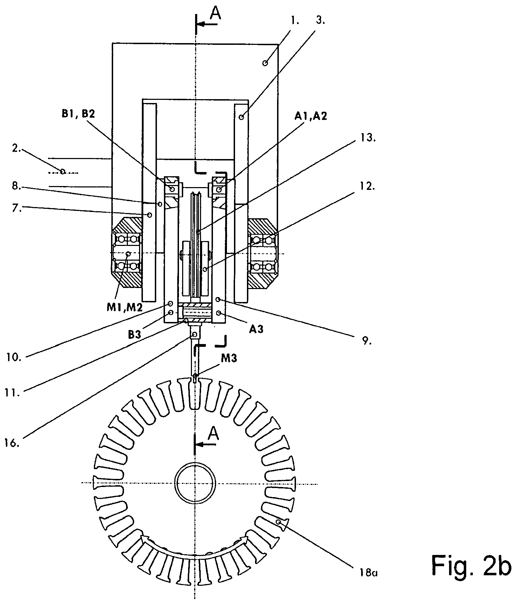

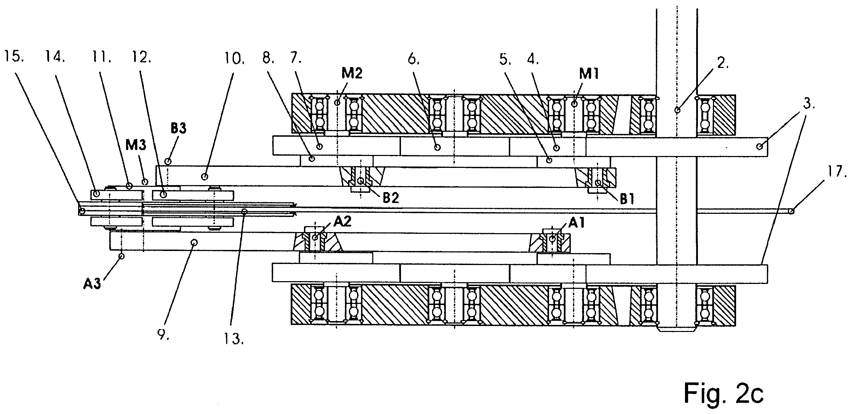

Die Figuren 2a, 2b und 2c zeigen dieselbe Ausführungsform des Nadelwickelsystems beim Bewickeln eines Rotors 18a. Gleiche Bezugszeichen bezeichnen gleiche Teile.

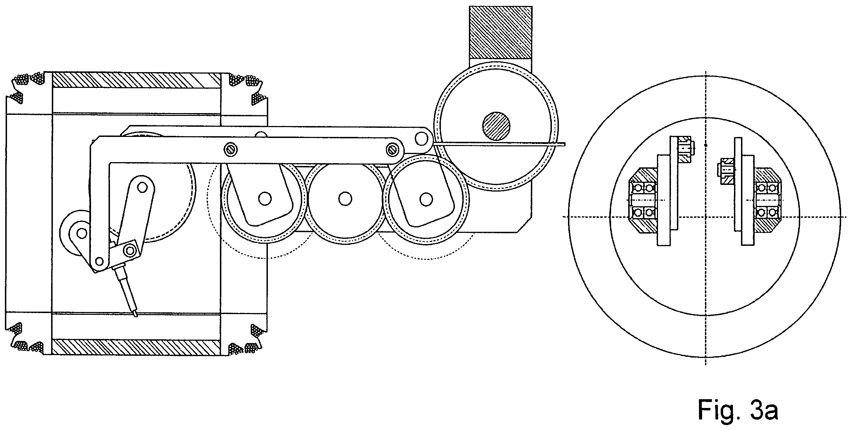

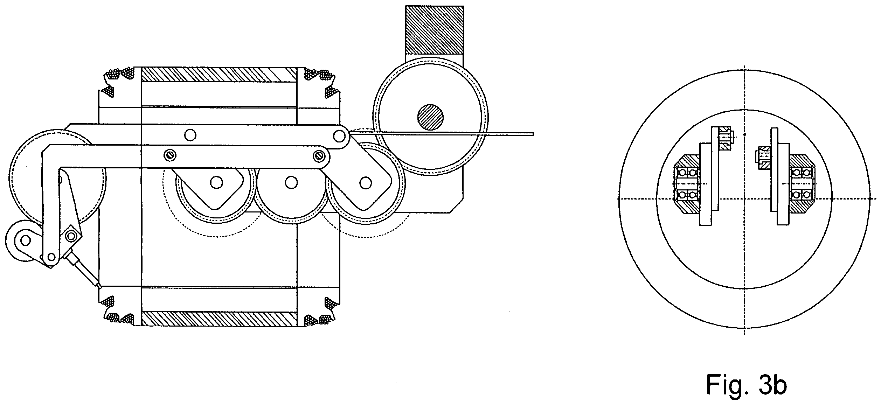

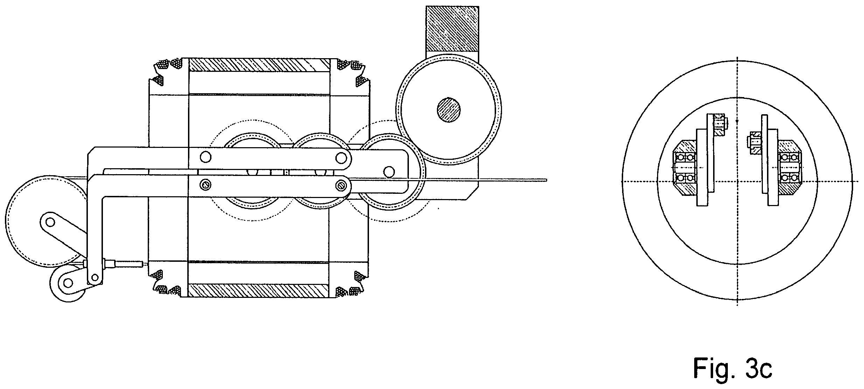

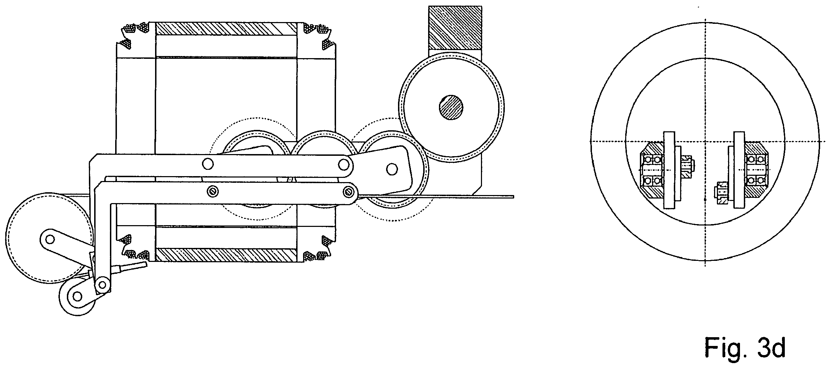

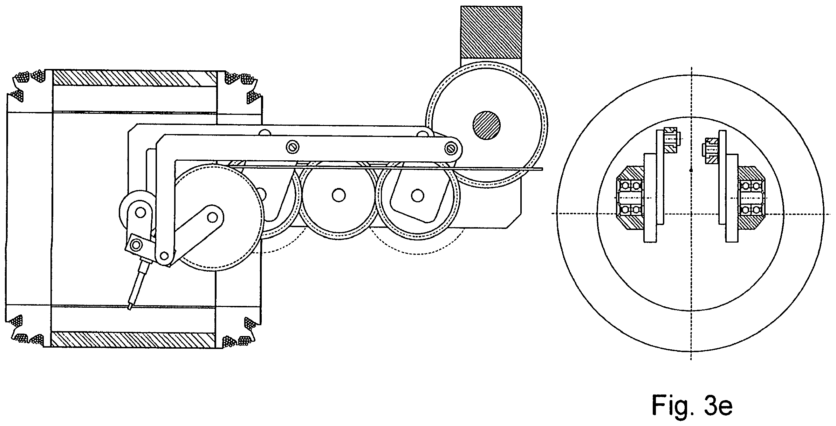

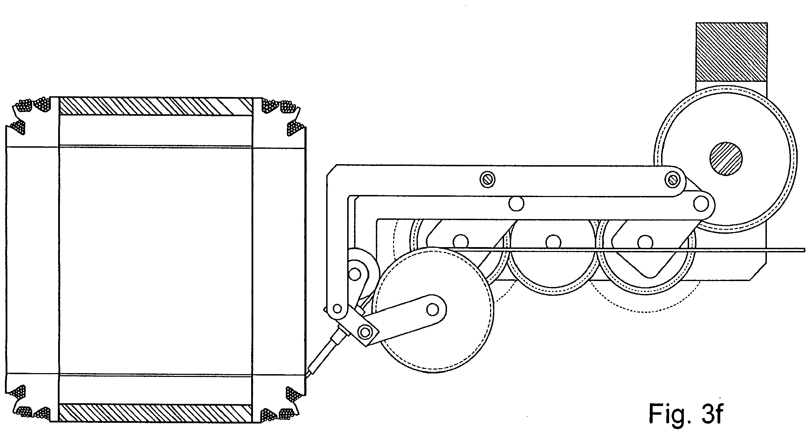

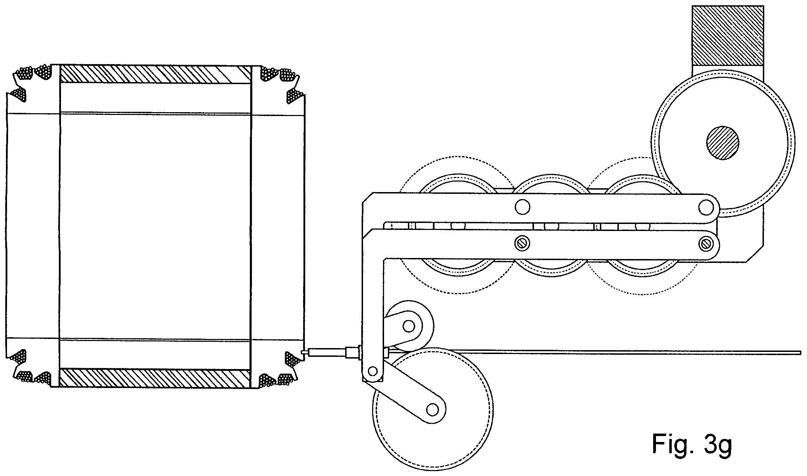

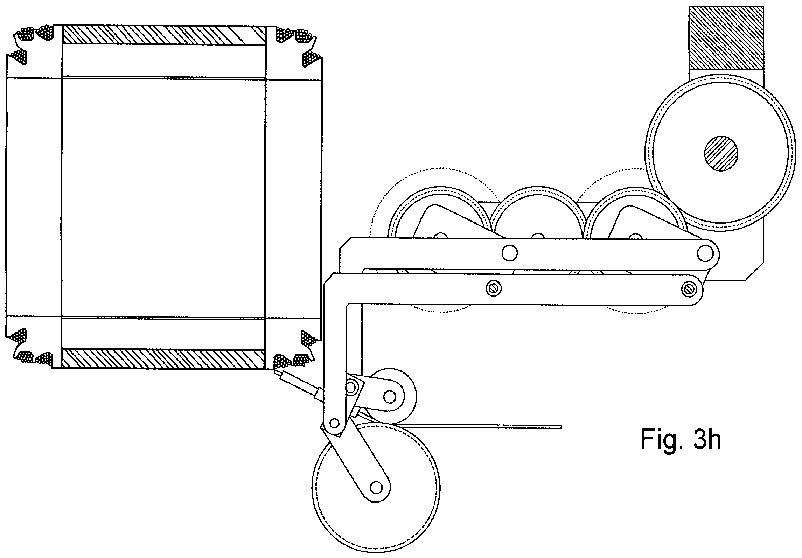

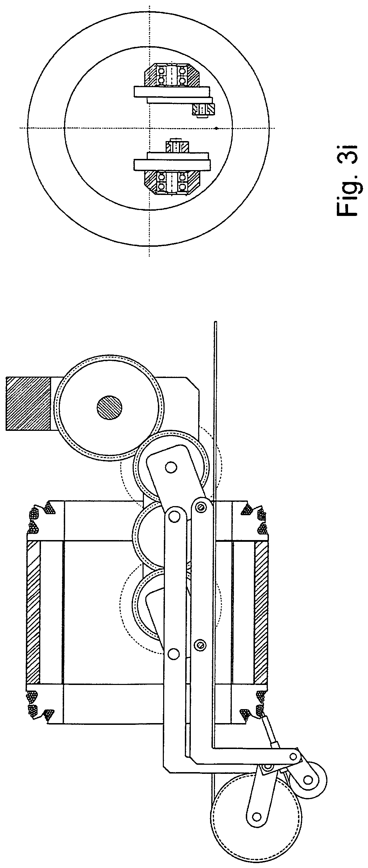

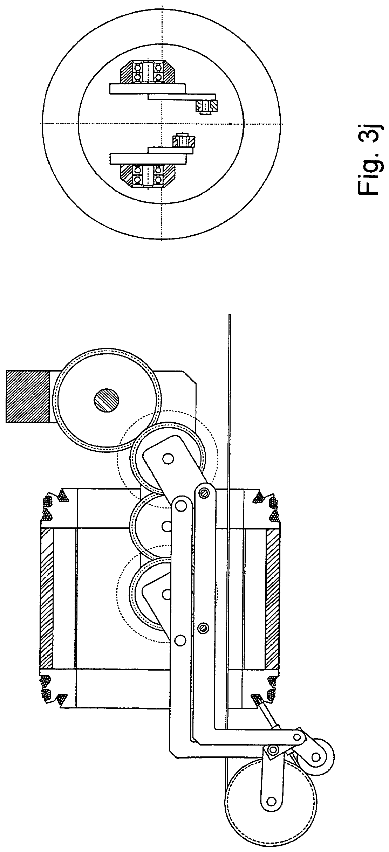

Anhand der Figuren 3a, 3b, 3c, 3d, 3e, 3f, 3g, 3h, 3i und 3j soll das Wickelverfahren veranschaulicht werden. Als Wicklungsträger ist als Beispiel ein Innenläufer-Stator dargestellt. Grundsätzlich können nach dem Verfahren Statoren wie Rotoren für Innenläufer-Elektromotoren und Außenläufer-Elektromotoren bewickelt werden.

In Figur 3a wird innen entlang einer Nut der Stator bewickelt. Der Draht wurde dafür vorzugsweise bereits zuvor an einer der Stirnseiten des Stators fixiert. Die Drahtaustrittsdüse fährt weiter innen entlang der Nut des Stators und erreicht die erste Stirnseite, was in Figur 3b dargestellt ist. Um den in Figur 3c dargestellten Bewegungszustand zu erreichen, führt der Schwenkklotz 11 nun eine Schwenkbewegung aus und bringt die Drahtaustrittsdüse in eine 180°-Stellung in Bezug auf die Nut, in der vorab entlang gefahren wurde. Die Drahtaustrittsdüse wird nun weiter bis zur in Figur 3d gezeigten Stellung geführt. In Figur 3d hat die Drahtaustrittsdüse die Aufnahme für die erste Phase U erreicht und kann den Draht in der Aufnahme ablegen, dabei wird der Stator entsprechend dem eingestellten Wickelschritt rotiert.

Nach der Rotation des Stators wird die Drahtaustrittsdüse wieder über die Stirnseite hinweg in die entsprechend dem eingestellten Wickelschritt nachfolgende Nut geführt und in dieser entlang gefahren. Dieser Zustand ist in Figur 3e dargestellt. Die Drahtaustrittsdüse wird entlang der Nut weiter geführt bis der Bewegungszustand der Figur 3f erreicht ist und die Drahtaustrittsdüse an der zweiten Stirnseite im Übergang zur Darstellung der Figur 3g wieder geschwenkt wird. Die Drahtaustrittsdüse wird weiter bis zum in Figur 3h dargestellten Zustand bewegt. In Figur 3h hat die Drahtaustrittsdüse die Aufnahme für die Phase U an der zweiten Stirnseite erreicht, der Stator kann nun wieder entsprechend dem vorgegebenen Wickelschritt rotiert werden, anschließend verlässt die Drahtaustrittsdüse wieder die Aufnahme. Wichtig ist, dass die erste Aufnahme an den Stirnseiten des Stators so angeordnet ist, dass der dieser Aufnahme zugeführte Draht die freigebliebenen Nuten und die für weitere Phasen vorgesehenen Aufnahmen nicht vorzeitig bereits im ersten Wickelschritt verdeckt.

Wenn der Draht der Phase U vollständig gewickelt wurde, wird die nächste Teilspule der Phase V gewickelt. Exemplarisch ist in Figur 3i dargestellt, wenn die Drahtaustrittsdüse die für Phase V vorgesehene Aufnahme an der ersten Stirnseite des Stators erreicht hat und der Stator entsprechend dem eingestellten Wickelschritt rotiert werden kann. Auch die zweite Aufnahme an den Stirnseiten des Stators muss so angeordnet sein, dass das Drahtbündel der Phase V in der Aufnahme, die Nuten und die Aufnahmen der Phase W nicht blockiert.

Die Bewicklung für die letzte Phase W kann nun in die verbliebenen freien Nuten erfolgen, wobei an den Stirnseiten des Stators die Drahtbündel in den entsprechenden Aufnahmen abgelegt werden. Da die Phase W die letzte zu wickelnde Phase ist, sind die Aufnahmen für diese letzte Phase in der Regel an den Stirnseiten des Stators unmittelbar über den Nuten angeordnet, so dass die Nuten verdeckt werden. Die Bewicklung in die Aufnahme an der ersten Stirnseite des Stators ist in Figur 3j dargestellt.

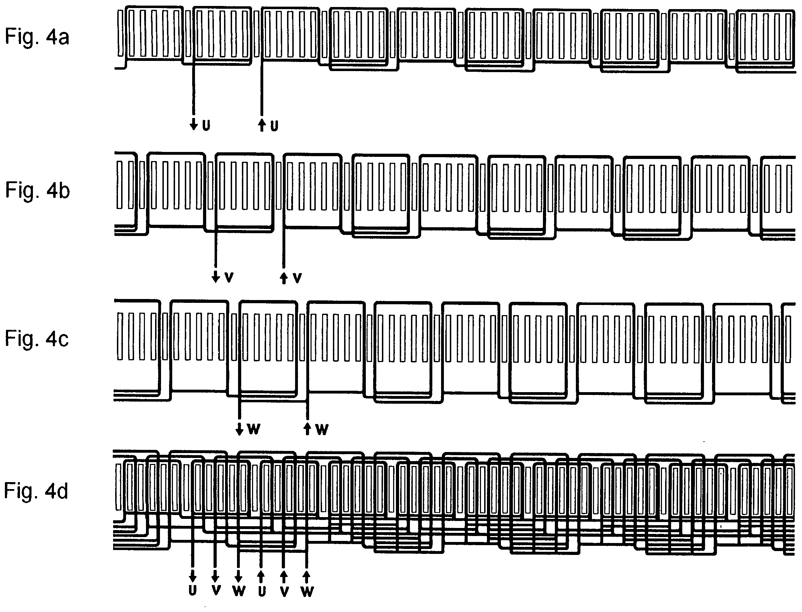

In den Figuren 4a, 4b, 4c und 4d ist exemplarisch ein Schaltschema dargestellt, nach dem ein Stator oder ein Rotor nach der Erfindung bewickelbar ist. Der Wickelschritt ist in diesem Fall 1:6, wobei auch andere Wickelschritte, wie 1:4, für die Bewicklung der Wicklungsträger der Erfindung mit dem Nadelwickelsystem nach der Erfindung nach dem Verfahren nach der Erfindung allein durch eine Softwareänderung des Maschinenprogramms denkbar sind.

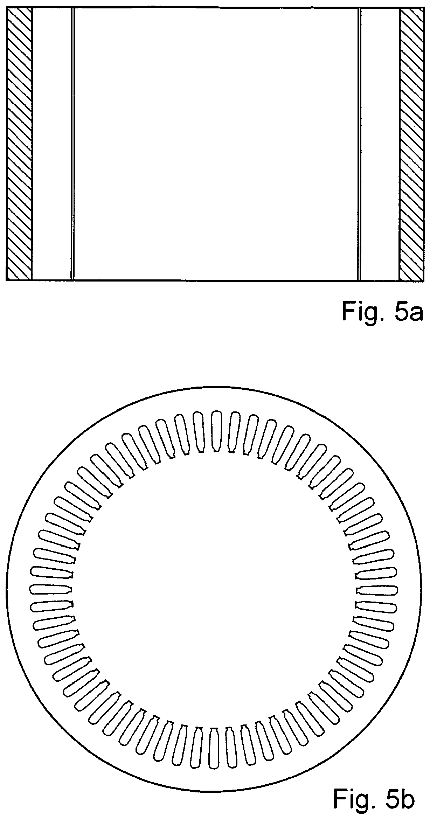

Die Figuren 5a und 5b zeigen das Blechpaket eines Innenläufer-Stators im Längsschnitt und im Querschnitt, wobei im Inneren des Zylinders Nuten angeordnet sind, die jeweils nach innen geöffnet sind.

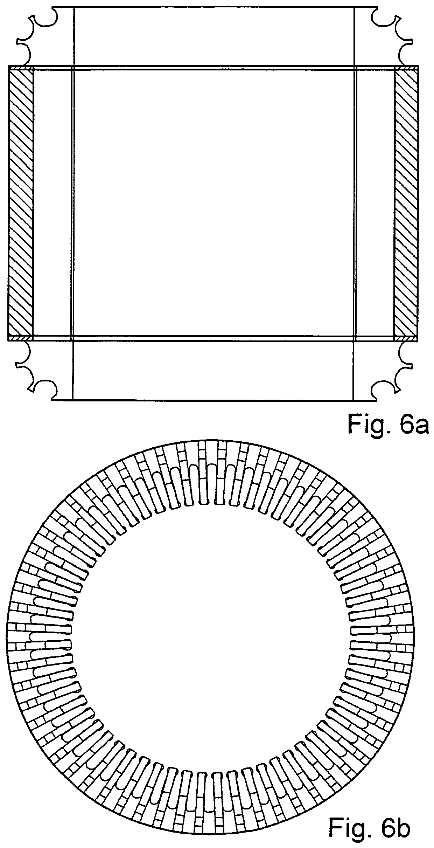

In den Figuren 6a und 6b ist der Stator der Figuren 5a und 5b analog mit einer Stirnseitenisolation dargestellt. Anhand dieser Figuren wird ersichtlich, dass die weiter außen angeordneten Aufnahmen mit Drahtbündeln belegt werden können, ohne die vergleichsweise zentralere letze Aufnahme an den Stirnseiten zu verdecken oder zu blockieren.

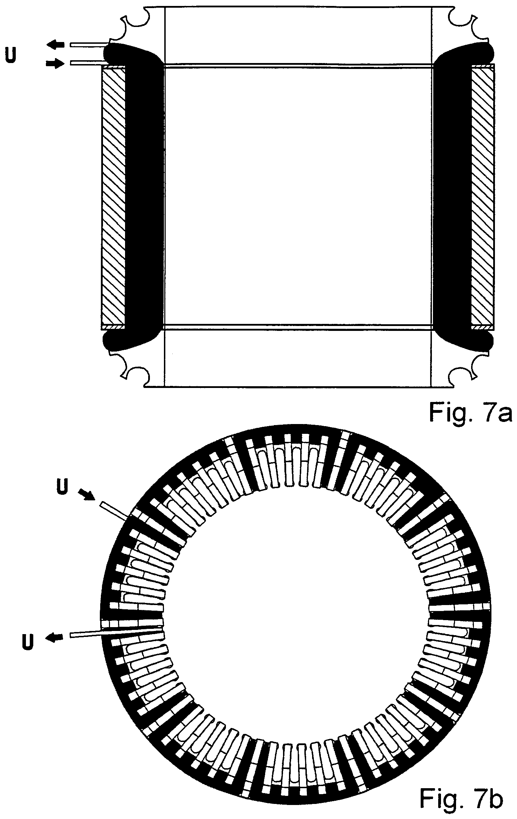

Die Figuren 7a und 7b zeigen den Stator der Figuren 6a und 6b, der nun mit einem Drahtbündel der Phase U in einer ersten Wicklung bewickelt wurde.

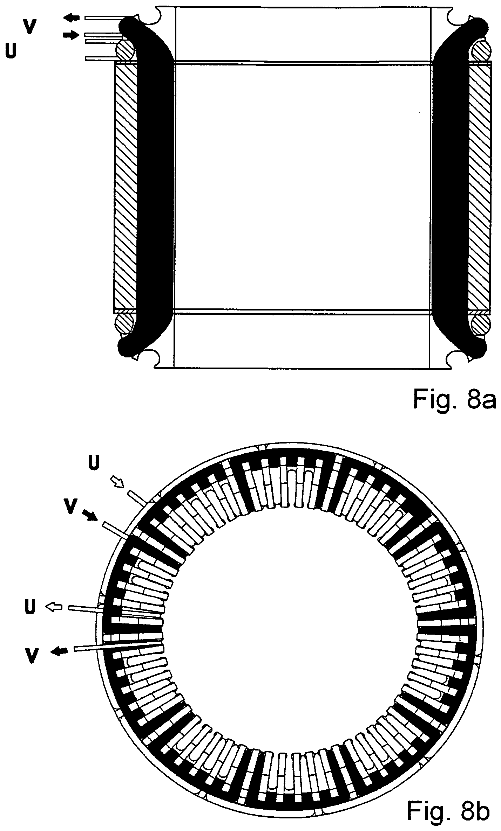

Die Figuren 8a und 8b zeigen den Stator der Figuren 7a und 7b, der nun mit einem Drahtbündel der Phase V in einer zweiten Wicklung bewickelt wurde. Die neue Wicklung ist schwarz eingezeichnet, die bereits vorhandene Wicklung ist schraffiert dargestellt.

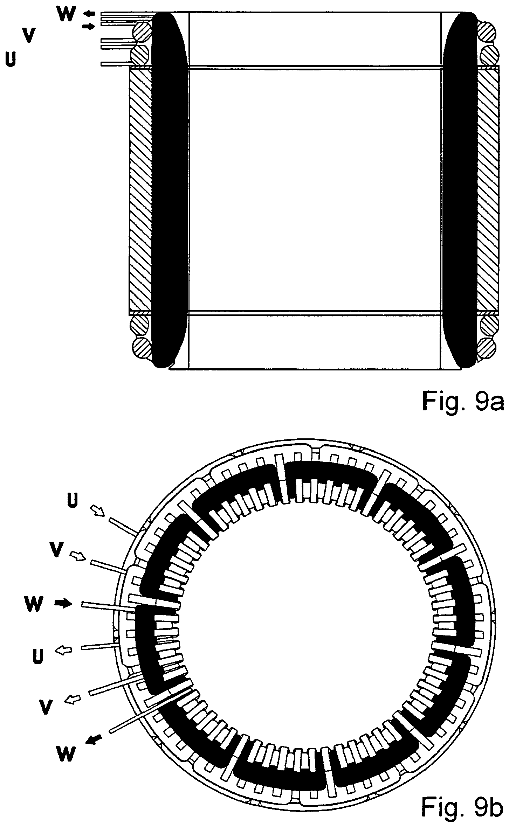

Die Figuren 9a und 9b zeigen den Stator der Figuren 8a und 8b, der nun mit einem Drahtbündel der Phase W in einer dritten Wicklung bewickelt wurde. Die hinzugekommene Wicklung ist schwarz eingezeichnet, während die bereits vorhandenen Wicklungen schraffiert dargestellt sind.

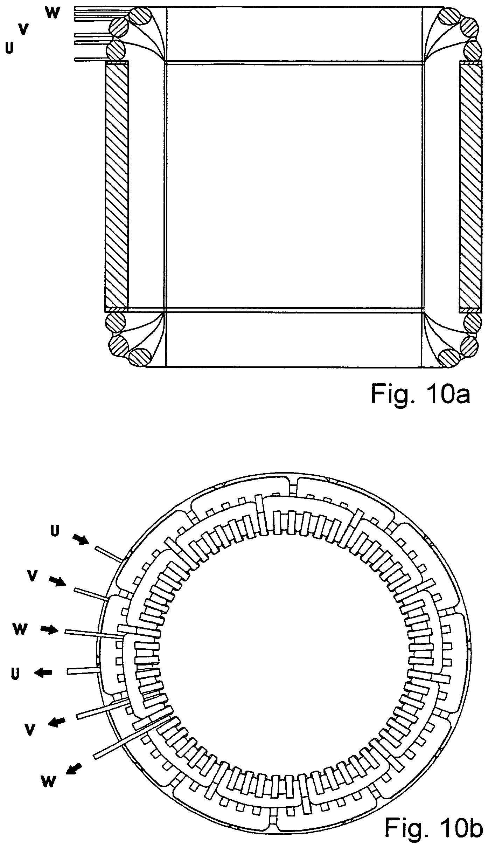

Die Figuren 10a und 10b zeigen den mit den Phasen U, V und W vollständig bewickelten Innenläufer-Stator.

## Patentansprüche

1. Nadelwickelsystem für zu bewickelnde Wicklungsträger (18, 18a), umfassend einen translatorisch in Längsrichtung und/oder in Querrichtung beweglichen Wickelkopf, ein Nadelträgersystem mit einer Drahtaustrittsdüse (16) und eine Drahtführung (17), wobei das Nadelträgersystem über eine Parallelogrammführung von einer Antriebseinheit antreibbar ist,
**dadurch gekennzeichnet,**
**dass** die Parallelogrammführung Kopplungsstangen (9, 10) so antriebt, dass ein Schwenkklotz (11) des Nadelträgersystems entlang eines vollen virtuellen Kreisumfangs schwenkbeweglich ist, wobei die Spitze (M3) der Drahtaustrittsdüse (16) des Nadelträgersystems stets ins Zentrum des virtuellen Kreises gerichtet ist und somit einen virtuellen Schwenkpunkt definiert.

2. Nadelwickelsystem nach Anspruch 1,
**dadurch gekennzeichnet,**
**dass** die Parallelogrammführung über Stellräder (4, 7), vorzugsweise über Zahnräder synchronisiert ist.

3. Nadelwickelsystem nach Anspruch 1 oder 2,
**dadurch gekennzeichnet,**
**dass** die Drahtführung vor der Drahtaustrittsdüse (16) eine jeweils mit einem Halter am Schwenkklotz (11) gelagerte Führungsrolle (15) und Umlenkrolle (13) aufweist.

## Claims

1. Needle winding system for winding supports (18, 18a) to be wound, comprising a winding head which is movable in translation in the longitudinal direction and/or in the transverse direction, a needle support system with a wire outlet nozzle (16) and a wire guide (17), wherein the needle support system can be driven by a drive unit via a parallelogram guide,
**characterised in that**
the parallelogram guide drives coupling rods (9, 10) so that a pivot block (11) of the needle support system is pivotally movable along a complete virtual circular circumference, wherein the tip (M3) of the wire outlet nozzle (16) of the needle support system is always directed into the centre of the virtual circle and thus defines a virtual pivot point.

2. Needle winding system according to claim 1,
**characterised in that**
the parallelogram guide is synchronised via adjusting wheels (4, 7), preferably via gearwheels.

3. Needle winding system according to claim 1 or 2
**characterised in that**
the wire guide has in front of the wire outlet nozzle (16) a guide roller (15) and deflection roller (13) each mounted by a holder on the pivot block (11).

## Revendications

1. Système d'enroulement à aiguille pour des supports d'enroulement (18, 18a) devant être bobinés, comprenant une tête d'enroulement mobile en translation dans la direction longitudinale et/ou dans la direction transversale, un système de support d'aiguille avec une buse de sortie de fil (16) et un guidage de fil (17), sachant que le système de support d'aiguille peut être entraîné par une unité d'entraînement, par l'intermédiaire d'un guidage en parallélogramme,
**caractérisé en ce que**,
le guidage en parallélogramme entraîne des tiges de couplage (9, 10) qu'un block pivotant (11) du système de support d'aiguille peut être déplacé en pivotement le long d'une circonférence virtuelle, complète, sachant que la pointe (M3) de la buse de sortie de fil (16) du système de support d'aiguille est continuellement orienté au centre du cercle virtuel et définit ainsi un centre de gravité virtuel.

2. Système d'enroulement à aiguille selon la revendication 1,
**caractérisé en ce que**
le guidage en parallélogramme est synchronisé par l'intermédiaire de roues de réglages (4, 7), préférentiellement de roues dentées.

3. Système d'enroulement à aiguille selon revendication 1 ou 2,
**caractérisé en ce que**,
le guidage du fil présente en amont de la buse de sortie de fil (16) un rouleau de guidage (15) et un rouleau de déviation (13), qui sont montés chacune sur le bloc pivotant (11) au moyen d'un support.
